# EUROPEAN PATENT SPECIFICATION

(11) **EP 3 322 288 B1**
(45) Date of publication and mention of the grant of the patent: **14.04.2021**
(21) Application number: 16757073.8
(22) Date of filing: 13.07.2016
(51) Int. Cl.: A01M 1/22, A01M 1/02, A01M 1/04, A01M 3/02

(54) **INSECTICIDE DEVICE**
ELEKTRISCHE FLIEGENKLATSCHE
TAPETTE ÉLECTRIQUE

(30) Priority: 13.07.2015 IT UB20152114
(43) Date of publication of application: 23.05.2018
(73) Proprietor: Den Di De Nora, Paolo, 40053 Valsamoggia (BO) (IT)
(72) Inventor: DE NORA, Paolo, 40033 Casalecchio di Reno (IT)
(74) Representative: Milli, Simone
(86) International application number: PCT/IB2016/054165
(87) International publication number: WO 2017/009780

(56) References cited:
- AU-B2- 719 043
- JP-A- 2002 281 882
- US-A- 5 533 298
- US-A1- 2010 088 947
- US-A1- 2010 132 247
- US-A1- 2015 045 856

## Description

### Technical field

The present invention relates to an insecticide device. More in particular, the invention concerns an insecticide device which exploits the generation of a high power voltage to eliminate insects such as mosquitos, flies, wasps and the like.

### Background art

Insecticide devices are known which exploit the generation of a high power voltage to kill the insects which cross a region of space in which an electric field has been artificially produced.

The above devices can be of various types, in relation to the specific construction solution adopted. For example, according to a number of construction solutions, such device comprises a support which can be rested on a surface, or which can be hung, or again which can be fixed to the wall, with which a number of metallic elements are associated, shaped for example like a cage; to the above metallic elements is applied, by a specific generator circuit, a high difference of electric potential, so as to create, among the metallic elements themselves, an electric field of such size as to instantly determine the death of the insects that cross it.

According to other construction solutions, the device consists of a portable tool and comprises a grip which enables the user to handle the device itself so as to eliminate the insects which cross the region of space wherein the electric field is generated.

Patent application US 2015/045856 A1 shows for example an insecticide device consisting of a comb comprising a first plurality of teeth of conductive material alternated with a second plurality of teeth of conductive material. An electric circuit in electric communication with said comb is predisposed to generate a difference in potential between the first and the second plurality of conductive teeth.

US 2010/088947 discloses another type of insecticide device with a grippable tool having a flat frame of substantially annular shape.

In the flat frame there are a first and a second electrically conductor elements defining between them a region of space delimited by the frame. The first and second electrically conductor elements are connected to a power voltage generator conductor element configured to generate in said region of space an electric filed of intensity able to kill insects.

The manufacture of insecticide devices of known type involves the use of a high number of components which require laborious assembly operations and which determine high inventory costs. This concerns above all, but not only, the presence of metallic elements connected to the generator circuit which have to be assembled to the remaining parts of the structure, normally made of plastic material.

The above plastic parts are rather complex from a manufacturing viewpoint, inasmuch as they have to provide for areas of coupling to the metallic elements, to the generator circuit components and to the power cables connecting up the parts. All this must then be correctly assembled, with fairly high times and labor costs.

These problems make such products, which must have a price accessible to everyone, less competitive on the market.

### Detailed description of the invention

The aim of the present invention is to solve the above problems by devising an insecticide device having innovative characteristics compared to prior art.

In the ambit of this aim, a further object of the present invention is to provide an insecticide device having a high elimination capacity.

A further object of the present invention is to provide an insecticide device which comprises a fewer number of components compared to known devices.

Another object of the present invention is to provide an insecticide device which can be assembled quicker and more cheaply compared to known devices.

A further object of the invention is to provide an insecticide device of simple construction and functional concept, having surely reliable operation, versatile use and a relatively economic cost.

The above objects are achieved, according to the present invention, by the insecticide device according to claim 1.

The insecticide device conforms a grippable tool for eliminating insects and the like made in the shape of a racket.

The tool comprises a flat frame with a substantially annular shape which extends from a trunk conforming a grip.

With the frame are associated a first electrically conductor element and a second electrically conductor element, reciprocally positioned so as to define between them a region of space delimited by the frame itself.

Said first electrically conductor element and second electrically conductor element comprise at least one respective portion made of electrically conductive polymer material.

Preferably, said first electrically conductor element and second electrically conductor element are made entirely of electrically conductive polymer material.

The device comprises a power voltage generator circuit, to which are connected said first electrically conductor element and second electrically conductor element, said power voltage generator circuit being predisposed to generate in said region of space delimited by the frame an electric field of intensity able to kill the insects that cross it.

Preferably, said first electrically conductor element and second electrically conductor element comprise at least one respective substantially annular rim which bears inside a series of substantially threadlike elongated elements, connected at the relative ending parts to opposite points of the same rim.

Preferably, said substantially threadlike elongated elements cross said frame according to a direction substantially orthogonal to the longitudinal axis of said tool.

Preferably, said first electrically conductor element comprises a first rim and a second rim coupled with said frame and arranged facing one another.

Preferably, said second electrically conductor element comprises a third rim interposed between said first rim and said second rim of the first electrically conductor element.

Preferably, said third rim is at least partially integrated inside said frame.

Preferably, said frame and said third rim are obtained by a single co-molding operation.

Preferably, said substantially threadlike elongated elements of said first rim and second rim are staggered or alternated with respect to the corresponding substantially threadlike elongated elements of said third rim along the longitudinal axis of said tool.

Preferably, said frame encloses a stiffening element which connects at least two of its surface portions or points and which integrates at least partially said second electrically conductor element.

Preferably, said frame is made of electrically insulating polymer material.

Preferably, said grip is made of electrically insulating polymer material.

Preferably, the device comprises led light means predisposed to attract insects inside said region of space wherein the electric field is produced.

### Short description of drawings

The details of the invention will appear more evident from the detailed description of preferred embodiments of the insecticide device according to the invention, illustrated by way of example on the attached drawings, wherein:
figure 1 shows a front view of an insecticide device according to the invention;
figure 2 shows a side view of the device of figure 1;
figure 3 shows a front detailed view of the device;
figure 4 shows a rear detailed view of the device;
figure 5 shows a detailed perspective view of the device;
figure 6 shows a detailed perspective view of the grip of the device;
figure 7 shows a detailed perspective view of the closing cover of the battery compartment of the device;
figure 8 shows a detailed perspective view, with some parts removed for greater clarity, of the grip of the device;
figure 8A shows a view of a detail of the grip of the device.

### Embodiments of the invention

With particular reference to such figures, altogether by 1 has been indicated the insecticide device according to the present invention. The device 1 substantially consists of a grippable tool 2 for eliminating insects such as mosquitos, flies, wasps and the like. The tool 2 is advantageously made in the shape of a racket and comprises in particular a flat frame 8 of substantially annular shape which extends from a trunk conforming a grip 7. For example, the frame 8 has an oval shape.

With the frame 8 are associated a first electrically conductor element 3 and a second electrically conductor element 4 reciprocally positioned so as to define between them a region of space 5, delimited by the frame 8 itself.

The first electrically conductor element 3 and the second electrically conductor element 4 are connected to a power voltage generator circuit, indicated in its entirely by 6. The power voltage generator circuit 6 is housed in the trunk of the tool 2, preferably up against the frame 8. The power voltage generator circuit 6 is predisposed to generate, in the said region of space 5 delimited by the frame 8, or in any case in the proximity of this, an electric field of intensity able to instantly cause the elimination of the insects that cross it.

According to the invention, the first electrically conductor element 3 and the second electrically conductor element 4 are made entirely of electrically conductive polymer material.

The electrically conductive polymer material used to make the conductor elements 3, 4 can be obtained by mixing various conductive materials with non-conductive plastic materials, until, for each different application, the right interaction is obtained between conductivity, shock resistance and polymer workability. By way of example, plastic materials can be used such as polyamide, acetate resins, polypropylene and the like.

The grip 7 of the tool 2 is made of an electrically insulating material, e.g., an electrically insulating polymer material.

Similarly, the frame 8 of the tool 2 is made of an electrically insulating material, e.g., an electrically insulating polymer material.

The first electrically conductor element 3 and the second electrically conductor element 4 comprise a respective substantially oval rim 9, 10, 11. Each rim 9, 10, bears inside it a series of substantially threadlike elongated elements 12, 13. Such threadlike elements 12, 13 are connected at the relative ending parts to opposite points of the rim 9, 10, 11.

More in detail, the first electrically conductor element 3 comprises a first rim 9 and a second rim 10, identical to one another, at least in their portion involving the frame 8.

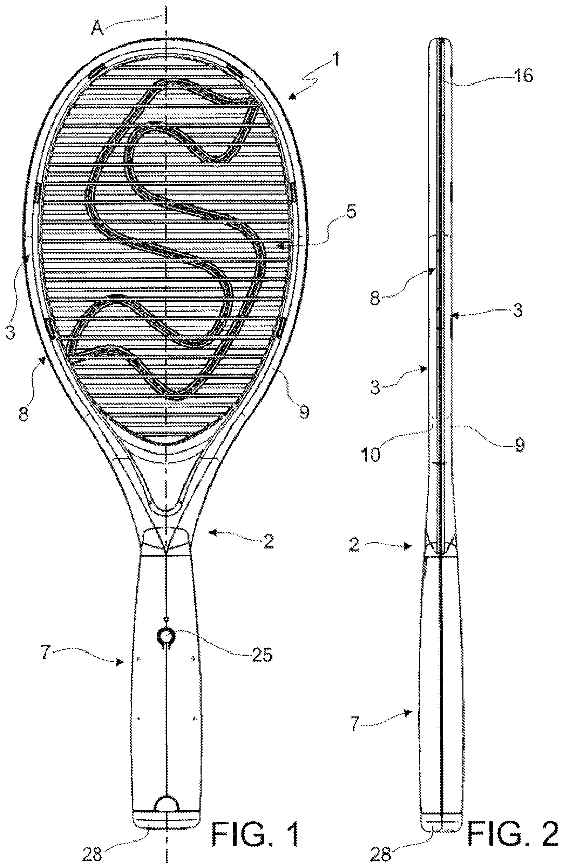

The first rim 9 and the second rim 10 are coupled to the frame 8 on opposite sides, arranged facing one another (see in particular figure 2).

The second electrically conductor element 4 in turn comprises a third rim 11, interposed between the first rim 9 and the second rim 10.

More in detail, according to the invention, the third rim 11 is at least partially integrated inside the frame 8. Between the first electrically conductor element 3 and the second electrically conductor element 4 the electric insulation is thus obtained, being needed to obtain the suitable difference in potential for the insecticide device to operate.

According to an advantageous embodiment of the invention, the frame 8 and the third rim 11 are obtained through a single molding or co-molding operation. This permits cutting production times and costs of the functional components of the insecticide device.

According to another embodiment of the invention, the frame 8 could be made in two symmetric parts, to be joined around the third rim 11.

The first and the second rim 9, 10 comprise respective first and second threadlike elements 12, 13, while the third rim 11 comprises third threadlike elements 14.

The threadlike elements 12, 13, 14 respectively of the first, second and third rim 9, 10, 11 consist in particular of thin parallel strips which cross the frame 8 in a direction orthogonal or substantially orthogonal to the longitudinal axis A of the tool 2. Obviously, the direction in which the threadlike elements 12, 13, 14 are arranged can be any, depending on requirements.

The first and second threadlike elements 12, 13 of the first and second rim 9, 10 respectively are staggered to one other with respect to the third threadlike elements 14 of the third rim 11, along the longitudinal axis A of the tool 2.

In other words, the third threadlike elements 14 of the third rim 11 are positioned at the interspaces included between the first threadlike elements 12 of the first rim 9 or between the second threadlike elements 13 of the second rim 10.

This permits creating an electric field as uniform as possible inside the pre-established region of space 5.

The frame 8 has inside it a stiffening element 15 connecting at least two of its surface portions or points. The stiffening element 15 partially integrates the second electrically conductor element 4.

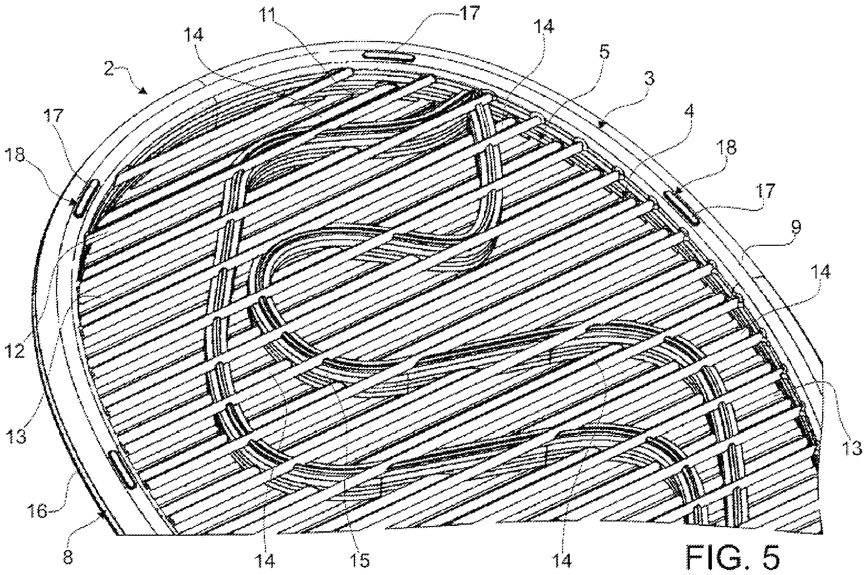

More precisely, the threadlike elements 14 of the third rim 11 cross the thickness of the stiffening element 15 (see in particular figure 5).

The shape of the stiffening element 15 can be any; for example, it can be shaped so as to reproduce an image or a logo.

The frame 8 can be made so as to present a perimeter edge 16 slightly protruding with respect to the first electrically conductor element 3. This permits laterally preserving the integrity of the first electrically conductor element 3 from accidental knocks which could damage or scratch it.

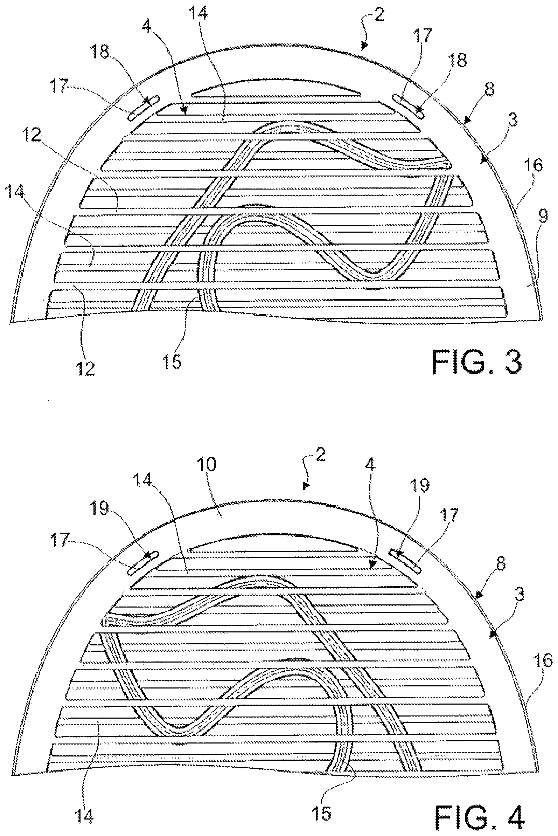

Preferably, the coupling between the frame 8 and the first electrically conductor element 3 is obtained by reliefs 17, made on both the faces of the frame 8 itself. The reliefs 17 engage, for example by pressing or interlocking, at corresponding first and second through seats 18, 19 provided in the first rim 9 and in the second rim 10 respectively (see in particular figures 3 and 4).

The reliefs 17 suitably protrude with respect to the first rim 9 and to the second rim 10. The reliefs 17 also act as level supporting surfaces of the tool 2, to avoid damaging or scratching the first rim 9 or the second rim 10.

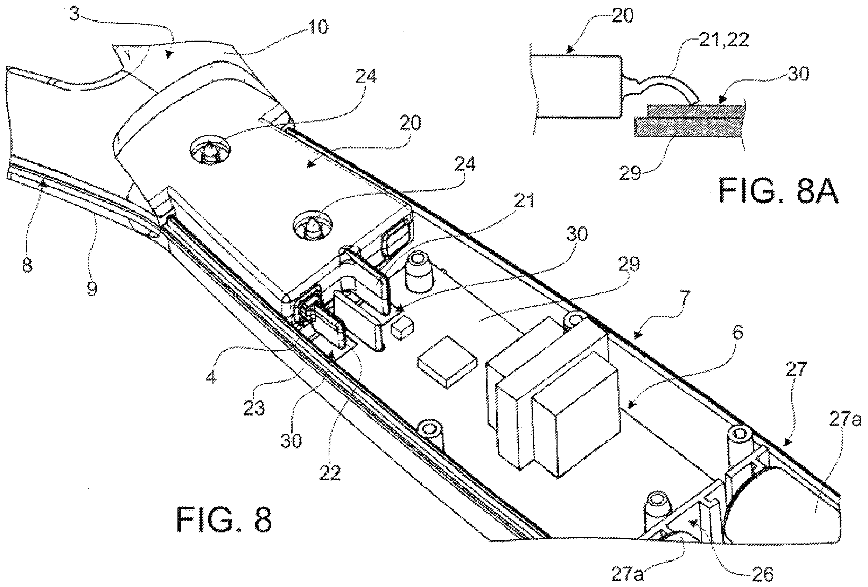

Ultimately, the first rim 9, the second rim 10, the frame 8 and the third rim 11 are coupled the one to the other like a "sandwich" (see in particular figure 8).

The unit thus assembled has a terminal portion, indicated altogether by 20, which extends in the trunk of the tool 2 for coupling with the grip 7.

At such terminal portion 20, the first electrically conductor element 3 and the second electrically conductor element 4 comprise a first portion 21 and a second portion 22 respectively. Substantially, the first portion 21 and the second portion 22 are portions of ending parts of the first electrically conductor element 3 and of the second electrically conductor element 4 respectively.

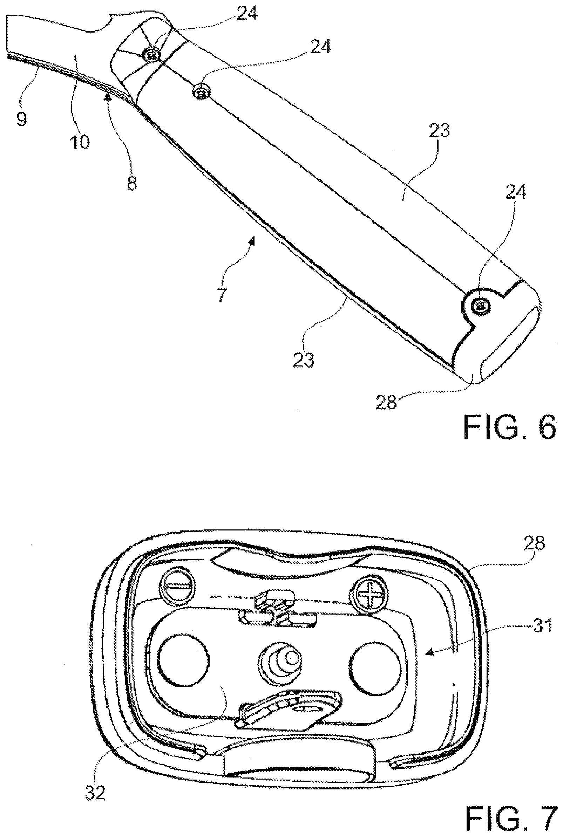

As is shown in the figure 6, the grip 7 comprises a pair of half-shells 23 coupled together and secured tight to the terminal portion 20, for example using fixing screws 24 passing through the terminal portion 20 itself. On one of the half-shells 23 an operating push-button 25 of the device is provided.

In one of the half-shells 23, or if necessary in both the half-shells 23, a compartment 26 is provided for housing the supply battery 27 for supplying the device. The compartment 26 is closed at the back by a cover 28.

The generator circuit 6, in itself known, comprises a supply battery 27 and a board 29 on which are mounted a transformer and a condenser, suitably connected. The generator circuit 6 is operatively slaved to the operating push-button 25.

The condenser has the plates connected to the first electrically conductor element 3 and to the second electrically conductor element 4.

The voltage supplied by the supply battery 27 becomes, at transformer output, a high voltage of a few thousand volts which is applied, through the condenser, to the electrically conductor elements 3, 4.

According to one aspect of the invention, the board 29 of the power voltage generator circuit 6 comprises at least two contact surfaces 30 in electrically conductive material. The contact surfaces 30 are connected to the components of the generator circuit 6 so that between them, during use, the adequate difference in electric potential is established to obtain the correct operation of the device.

The first portion 21 and the second portion 22 of the first electrically conductor element 3 and of the second electrically conductor element 4 respectively abut the contact surfaces 30, simply resting, so as to make, in a simple way, the necessary power connections.

In an alternative embodiment, schematically shown in detail in figure 8A, the first portion 21 and/or the second portion 22 can be made with an opportune geometric conformation, for example a curved lamina shape, which permits obtaining an electrical contact sliding on the contact surfaces 30 exploiting the elastic characteristics of the electrically conductive polymer material.

Various components are thus advantageously eliminated, e.g., electrical terminals or connectors, pieces to be welded or the like, used in the devices of known type, which represent a cost both for production and for storage. Consequently, assembly operations are considerably simplified.

The cover 28 of the compartment 26 for the supply battery 27 is made of electrically insulating polymer material. The cover 28 internally defines a seat 31 for an electrically conducting plate 32 which closes the electric circuit of the supply battery 27, e.g., made up of a pair of batteries 27a.

The plate 32 is made of electrically conductive polymer material, using, for example, the same mold to produce the other components in conductive polymer material.

In another embodiment of the invention, not shown in the figures, the cover 28 could be made entirely of electrically conductive polymer material, with evident advantages in terms of production and assembly costs of the specific component and the device as a whole.

It must be pointed out that the characteristics of the electrically conductive polymer material used are particularly adequate for this specific application inasmuch as in operating conditions the material undergoes high power voltages, but at the same time it is crossed by a low-entity electric current, therefore there are no particular problems regarding excessive overheating of the material itself.

Advantageously, the insecticide device can be equipped with means predisposed to attract the insects inside the region of space wherein the electric field is produced. In particular, such attractive means are made up of light means, e.g., led lights, efficacious especially in the evening and night hours.

The operation of the described insecticide device is easy to appreciate from the preceding description. When the device is switched on, a high-intensity electric field is produced inside the region of space delimited by the frame 8 of the tool 2. By maneuvering the tool 2, by the grip 7, the insects can be eliminated which, by crossing the electric field, are instantly killed. The large eliminating surface defined by the frame 8 permits making the action of the device particularly effective.

The described insecticide device therefore achieves the object of providing a high elimination capacity along with simple construction and operation.

It should be observed that the adoption of electrically conductor elements 3, 4 made of electrically conductive polymer material is advantageous in terms of the costs of the individual components and the costs of their assembly; furthermore, the number of total components of the device is considerably reduced. The device is also lightweight and easy to handle.

Another advantage consists in the fact that the components, being made by molding of polymer material, can be widely customized and modified in terms of shapes, colors and the like, so as to achieve particular aesthetic results.

The elasticity of the polymer material makes the assembly of the components easier, with particular reference to making electrical contacts which are safe, inasmuch as elastically pre-charged.

The insecticide device described by way of example is susceptible to numerous changes and variations according to the different requirements.

In the practical implementation of the invention, the shape and the dimensions, may be different to those indicated by way of example.

Where the technical features mentioned in each claim are followed by reference marks, such reference marks have been included for the sole purpose of increasing the understanding of the claims and accordingly they do not have any limitative value as regards the purpose of each element identified by way of example by such reference marks.

## Claims

1. Insecticide device comprising a grippable tool (2) for eliminating insects and the like which comprises
a flat frame (8) of substantially annular shape which extends from a trunk shaping a grip (7); a first electrically conductor element (3) and a second electrically conductor element (4) associated with said frame (8) and reciprocally positioned so as to define between them a region of space (5) delimited by the frame itself (8);
a power voltage generator circuit (6), to which are connected said first electrically conductor element (3) and said second electrically conductor element (4), said power voltage generator circuit (6) being predisposed to generate in said region of space (5) an electric field of intensity able to kill the insects that cross it; the generator circuit (6) comprising a supply battery (27) and a board (29) on which are mounted a transformer and a condenser, suitably connected; the generator circuit (6) being operatively slaved to an operating push-button (25); **characterized in that** said first electrically conductor element (3) and said second electrically conductor element (4) are made entirely of electrically conductive polymer material; and wherein said first electrically conductor element (3) comprises a first rim (9) and a second rim (10), coupled with said frame (8) and arranged facing to one another, and said second electrically conductor element (4) comprises a third rim (11) interposed between said first rim (9) and said second rim (10); the third rim (11) being at least partially integrated inside the frame (8) in such way that between the first electrically conductor element (3) and the second electrically conductor element (4) the electric insulation is thus obtained, being needed to obtain the suitable difference in potential for the insecticide device to operate.

2. Device according to claim 1, **characterized in that** said first electrically conductor element (3) and second electrically conductor element (4) comprise the annular rims (9, 10, 11) which bear inside a series of substantially threadlike elongated elements (12, 13, 14), connected at the relative ending parts to opposite points of said rims (9, 10, 11).

3. Device according to claim 2, **characterized in that** said substantially threadlike elongated elements (12, 13, 14) cross said frame (8) according to a direction substantially orthogonal to a longitudinal axis (A) of said tool (2).

4. Device according to claim 2, **characterized in that** said substantially threadlike elongated elements (12, 13) of said first rim (9) and said second rim (10) are staggered or alternated with respect to the corresponding said elongated elements (14) of said third rim (11) along said longitudinal axis (A) of said tool (2).

5. Device according to one of the preceding claims, **characterized in that** said frame (8) comprises, contained inside said region of space (5), at least one stiffening element (15) which connects at least two of its surface portions or points, and which integrates at least partially said second electrically conductor element. (4).

6. Device according to one of the preceding claims, **characterized in that** said frame (8) and said grip (7) are made of electrically insulating polymer material.

7. Device according to one of the preceding claims, **characterized in that** said power voltage generator circuit (6) comprises a board (29) on which are provided at least two contact surfaces (30) of conductive material between which, during use, a difference in electric potential is established, on said contact surfaces (30) abutting respectively a first portion (21) and a second portion (22) of said first electrically conductor element (3) and of said second electrically conductor element (4), so as to made relative power connections.

## Patentansprüche

1. Insektizidvorrichtung umfassend ein greifbares Werkzeug (2) zur Beseitigung von Insekten und dergleichen, umfassend
einen flachen Rahmen (8) von im Wesentlichen ringförmiger Form, der sich von einem Stamm erstreckt, der einen Griff (7) formt;
ein erstes elektrisch leitendes Element (3) und ein zweites elektrisch leitendes Element (4), die dem Rahmen (8) zugeordnet und wechselseitig positioniert sind, um zwischen ihnen einen durch den Rahmen selbst (8) begrenzten Raumbereich (5) zu definieren;
eine Versorgungsspannungsgeneratorschaltung (6), mit der das erste elektrisch leitende Element (3) und das zweite elektrisch leitende Element (4) verbunden sind, wobei die Versorgungsspannungsgeneratorschaltung (6) ausgebildet ist, um in dem Raumbereich (5) ein elektrisches Intensitätsfeld zu erzeugen, das die Insekten, die es durchqueren, töten kann; wobei die Generatorschaltung (6) eine Versorgungsbatterie (27) und eine Platine (29) umfasst, auf der ein Transformator und ein Kondensator angebracht sind, die geeignet verbunden sind; wobei die Generatorschaltung (6) betriebswirksam mit einem Betriebstaster (25) gekoppelt ist;
**dadurch gekennzeichnet, dass** das erste elektrisch leitende Element (3) und das zweite elektrisch leitende Element (4) vollständig aus elektrisch leitendem Polymermaterial bestehen; und wobei das erste elektrisch leitende Element (3) einen ersten Rand (9) und einen zweiten Rand (10) umfasst, die mit dem Rahmen (8) gekoppelt und einander zugewandt angeordnet sind, und das zweite elektrisch leitende Element (4) einen dritten Rand (11), der zwischen dem ersten Rand (9) und dem zweiten Rand (10) angeordnet ist, umfasst; wobei der dritte Rand (11) zumindest teilweise in den Rahmen (8) integriert ist, sodass zwischen dem ersten elektrisch leitenden Element (3) und dem zweiten elektrisch leitenden Element (4) die elektrische Isolierung erhalten wird, die benötigt wird, um die geeignete Potentialdifferenz für den Betrieb der Insektizidvorrichtung zu erhalten.

2. Vorrichtung nach Anspruch 1, **dadurch gekennzeichnet, dass** das erste elektrisch leitende Element (3) und das zweite elektrisch leitende Element (4) die ringförmigen Ränder (9, 10, 11) umfassen, die in einer Reihe von im Wesentlichen fadenförmigen länglichen Elementen (12, 13, 14), die an den relativen Endteilen mit gegenüberliegenden Punkten der Ränder (9, 10, 11) verbunden sind, innen tragen.

3. Vorrichtung nach Anspruch 2, **dadurch gekennzeichnet, dass** die im Wesentlichen fadenförmigen länglichen Elemente (12, 13, 14) den Rahmen (8) gemäß einer Richtung kreuzen, die im Wesentlichen orthogonal zu einer Längsachse (A) des Werkzeugs (2) ist.

4. Vorrichtung nach Anspruch 2, **dadurch gekennzeichnet, dass** die im Wesentlichen fadenförmigen länglichen Elemente (12, 13) des ersten Randes (9) und des zweiten Randes (10) in Bezug auf die entsprechenden länglichen Elemente (14) des dritten Rands (11) entlang der Längsachse (A) des Werkzeugs (2) versetzt oder abwechselnd sind.

5. Vorrichtung nach einem der vorhergehenden Ansprüche, **dadurch gekennzeichnet, dass** der Rahmen (8) innerhalb des Raumbereichs (5) zumindest ein Versteifungselement (15) umfasst, das zumindest zwei seiner Oberflächenabschnitte oder -punkte verbindet, und welches zumindest teilweise das zweite elektrisch leitende Element (4) integriert.

6. Vorrichtung nach einem der vorhergehenden Ansprüche, **dadurch gekennzeichnet, dass** der Rahmen (8) und der Griff (7) aus elektrisch isolierendem Polymermaterial bestehen.

7. Vorrichtung nach einem der vorhergehenden Ansprüche, **dadurch gekennzeichnet, dass** die Versorgungsspannungsgeneratorschaltung (6) eine Platine (29) umfasst, auf der zumindest zwei Kontaktflächen (30) aus leitendem Material vorgesehen sind, zwischen denen während des Gebrauchs ein Unterschied in elektrischem Potential auf den Kontaktflächen (30) bereitgestellt ist, die jeweils an einem ersten Abschnitt (21) und einem zweiten Abschnitt (22) des ersten elektrisch leitenden Elements (3) und des zweiten elektrisch leitenden Elements (4) anliegen, um relative Versorgungsverbindungen herzustellen.

## Revendications

1. Dispositif insecticide comprenant un outil saisissable (2) pour l'élimination des insectes et similaires, comprenant
un cadre plat (8) de forme substantiellement annulaire qui se prolonge depuis un tronc formant un manche (7) ; un premier élément électriquement conducteur (3) et un second élément électriquement conducteur (4) associés audit cadre (8) et positionnés réciproquement de manière à définir entre eux une région d'espace (5) délimitée par le cadre lui-même (8) ;
un circuit générateur (6) de tension d'alimentation, auquel sont connectés ledit premier élément électriquement conducteur (3) et ledit second élément électriquement conducteur (4), ledit circuit générateur (6) de tension d'alimentation étant prédisposé pour générer dans ladite région d'espace (5) un champ électrique d'intensité pouvant tuer les insectes qui le traversent ; le circuit générateur (6) comprenant une batterie d'alimentation (27) et une carte (29) sur laquelle sont montés un transformateur et un condensateur, connectés de façon appropriée ; le circuit générateur (6) étant fonctionnellement asservi à un bouton-poussoir de commande (25) ;
**caractérisé en ce que** ledit premier élément électriquement conducteur (3) et ledit second élément électriquement conducteur (4) sont entièrement constitués d'un matériau polymère électriquement conducteur ; et dans lequel ledit premier élément électriquement conducteur (3) comprend un premier bord (9) et un deuxième bord (10), couplés audit cadre (8) et disposés en se faisant face, et ledit second élément électriquement conducteur (4) comprend un troisième bord (11) interposé entre ledit premier bord (9) et ledit deuxième bord (10) ; le troisième bord (11) étant au moins partiellement intégré à l'intérieur du cadre (8) de telle sorte qu'entre le premier élément électriquement conducteur (3) et le second élément électriquement conducteur (4), l'isolation électrique est ainsi obtenue, celle-ci étant nécessaire pour obtenir la différence de potentiel appropriée pour le fonctionnement du dispositif insecticide.

2. Dispositif selon la revendication 1, **caractérisé en ce que** lesdits premier élément électriquement conducteur (3) et second élément électriquement conducteur (4) comprennent les bords annulaires (9, 10, 11) qui supportent à l'intérieur une série d'éléments allongés (12, 13, 14) substantiellement filiformes, reliés aux parties d'extrémité relatives à des points opposés desdits bords (9, 10, 11).

3. Dispositif selon la revendication 2, **caractérisé en ce que** lesdits éléments allongés (12, 13, 14) substantiellement filiformes traversent ledit cadre (8) selon une direction substantiellement orthogonale à un axe longitudinal (A) dudit outil (2).

4. Dispositif selon la revendication 2, **caractérisé en ce que** lesdits éléments allongés (12, 13) substantiellement filiformes dudit premier bord (9) et dudit second bord (10) sont décalés ou alternés par rapport auxdits éléments allongés (14) correspondants dudit troisième bord (11) le long dudit axe longitudinal (A) dudit outil (2) .

5. Dispositif selon l'une des revendications précédentes, **caractérisé en ce que** ledit cadre (8) comprend, contenu à l'intérieur de ladite région d'espace (5), au moins un élément de raidissement (15) qui relie au moins deux de ses parties de surface ou points, et qui intègre au moins partiellement ledit second élément électriquement conducteur (4).

6. Dispositif selon l'une des revendications précédentes, **caractérisé en ce que** ledit cadre (8) et ledit manche (7) sont constitués d'un matériau polymère électriquement isolant.

7. Dispositif selon l'une des revendications précédentes, **caractérisé en ce que** ledit circuit générateur (6) de tension d'alimentation comprend une carte (29) sur laquelle sont prévues au moins deux surfaces de contact (30) en matériau conducteur entre lesquelles, pendant l'utilisation, une différence de potentiel électrique est établie sur lesdites surfaces de contact (30) venant se mettre en butée, respectivement, contre une première partie (21) et une seconde partie (22) dudit premier élément électriquement conducteur (3) et dudit second élément électriquement conducteur (4), de manière à réaliser des connexions d'alimentation relatives.
